# FASCICULE DE BREVET EUROPEEN

(11) **EP 0 686 473 B1**
(45) Date de publication et mention de la délivrance du brevet: **04.08.1999**
(21) Numéro de dépôt: 95401254.8
(22) Date de dépôt: 31.05.1995
(51) Int. Cl.: B29C 45/14, A47J 43/07

(54) **Procédé de fabrication d'un fouet de batteur électroménager et fouet de batteur obtenu par ce procédé**
Verfahren zur Herstellung eines elektrischen Haushaltschlagbesens und nach diesem Verfahren hergestellter Schlagbesen
Method for manufacturing an electrical domestic beater and beater obtained by this method

(30) Priorité: 06.06.1994 FR 9406906
(43) Date de publication de la demande: 13.12.1995
(73) Titulaire: MOULINEX S.A., 75008 Paris (FR)
(72) Inventeur: Diore, Christian, F-61100 Saint Germain du Corbeis (FR); Linger, Jean-Jacques, F-53000 Laval (FR)
(74) Mandataire: Busquets, Jean-Pierre

(56) Documents cités:
- DE-A- 2 815 697

## Description

La présente invention se rapporte à un procédé de fabrication d'un fouet de batteur électroménager comportant une tige présentant un axe longitudinal et comprenant, à l'une de ses extrémités, un moyeu portant au moins deux boucles formant chacune un agitateur réalisé en un fil métallique dont les extrémités sont solidaires du moyeu, latéralement à celui-ci.

Elle concerne, plus précisément, un procédé de fabrication d'un tel fouet de batteur électroménager, selon lequel le moyeu est réalisé par une opération de surmoulage par injection d'une matière plastique sur l'extrémité de la tige et sur les extrémités respectives des deux boucles.

Dans un tel procédé de fabrication connu, l'opération de surmoulage s'effectue, jusqu'à présent, en disposant préalablement dans le moule les deux boucles, en position d'assemblage mutuel définitif, dans l'alignement "axial" de la tige. Ce surmoulage est difficile à réaliser et nécessite un moule particulièrement compliqué, du type à plusieurs tiroirs de moulage, et par conséquent d'un prix de revient très élevé.

L'invention a pour but de remédier à ces inconvénients et de proposer un procédé de fabrication d'un fouet à moyeu surmoulé en matière plastique, qui soit simple, économique et parfaitement adapté à une fabrication automatique en grande série.

Selon l'invention, l'opération de surmoulage par injection d'une matière plastique, d'une part, est précédée d'une opération consistant à positionner dans le moule les deux boucles selon des plans respectifs transversaux à l'axe longitudinal de la tige de manière à permettre ultérieurement un démoulage axial, et d'autre part, est suivie successivement d'une opération consistant à faire pivoter chacune des deux boucles autour de ses extrémités pour amener lesdites boucles dans une position d'assemblage dans laquelle les tronçons des boucles opposés au moyeu se rejoignent en leur région médiane en un point de jonction situé sur l'axe longitudinal de la tige, et d'une opération de fixation des boucles entre elles au niveau de leur point de jonction.

Grâce à cette disposition disjointe et transversale des boucles dans le moule par rapport à la tige, et non plus conjointe et dans l'alignement direct de la tige comme dans l'art antérieur, l'opération de surmoulage par injection de la matière plastique permettant de réaliser le moyeu est grandement facilitée, de même que le démoulage subséquent, et l'outillage de moule servant à ce surmoulage est désormais considérablement simplifié et donc d'un prix de revient nettement moins élevé.

De préférence, les plans de positionnement des deux boucles dans le moule sont sensiblement horizontaux et orthogonaux à l'axe longitudinal de la tige, facilitant encore davantage les opérations de surmoulage et de démoulage en faisant appel à un moule d'une très grande simplicité.

L'invention vise également un fouet de batteur électroménager obtenu par exécution du procédé selon l'invention.

Les caractéristiques et avantages de l'invention ressortiront d'ailleurs de la description qui va suivre, à titre d'exemple non limitatif, en référence aux dessins annexés dans lesquels :
- la figure 1 est une vue schématique en perspective d'un exemple de fouet de batteur obtenu par mise en oeuvre d'un procédé de fabrication selon l'invention ; et
- les figures 2, 3 et 4 représentent différentes étapes du procédé de fabrication du fouet de la figure 1.

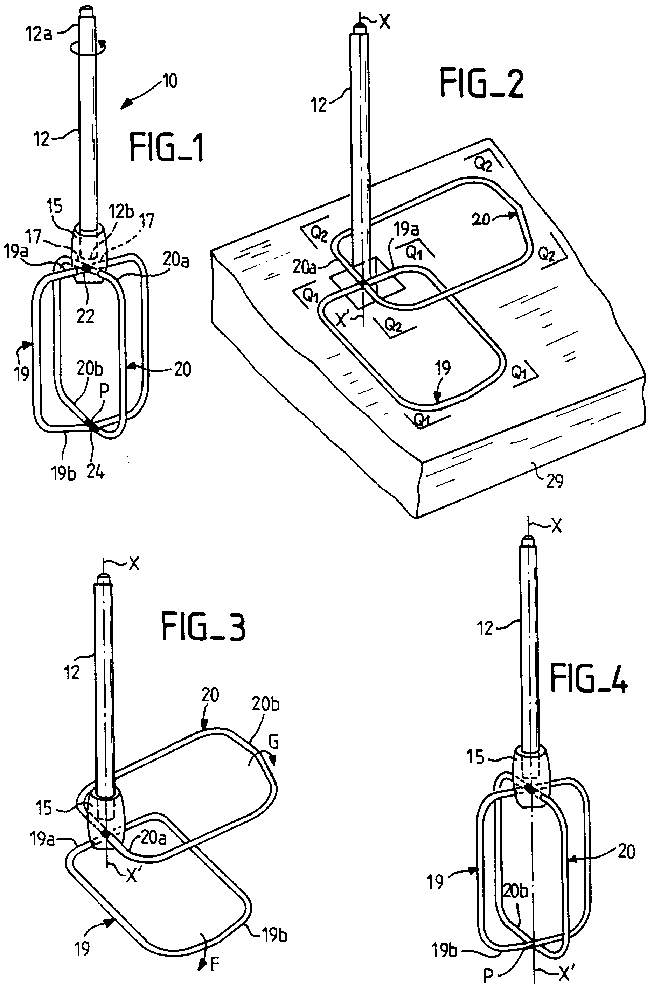

Suivant un exemple de réalisation, et en se reportant à la figure 1, on a représenté en 10 un fouet de batteur électroménager, comportant une tige métallique 12 dont une extrémité 12a est adaptée à être entraînée en rotation par un groupe moteur interne au batteur (non représenté) et dont l'autre extrémité 12b comporte un moyeu 15, de forme allongée, qui est surmoulé d'une seule pièce en une matière plastique propre à un contact avec des produits alimentaires, par exemple en polypropylène.

Dans cet exemple, figure 1, le moyeu 15 est percé à sa partie inférieure de deux alésages radiaux 17, orthogonaux entre eux et légèrement décalés en hauteur l'un par rapport à l'autre, et dans lesquels, lors de la réalisation par surmoulage du moyeu 15, sont agencées à friction respectivement les deux extrémités constituant les portions médianes de tronçons 19a et 20a de deux boucles ou anneaux identiques 19 et 20 réalisés chacun en un fil métallique, par exemple en acier inoxydable, destiné à former un agitateur. Présentement, les deux boucles 19 et 20 ont une forme générale approximativement rectangulaire et constituent en cela deux boucles fermées obtenues chacune à cet effet en assemblant leurs deux extrémités, au niveau de leur tronçon 19a, respectivement 20a, par tout moyen approprié tel que par exemple par un point de soudure 22 dont un seul, relatif à la boucle 20, est visible sur la figure 1.

A l'opposé du moyeu 15, les deux tronçons respectifs 19b et 20b des deux boucles 19 et 20 se croisent orthogonalement entre eux, en leur région médiane, et sont assemblés solidairement l'un à l'autre à leur point de croisement P par tout moyen approprié tel que par exemple par un point de soudure désigné par 24 sur la figure 1.

Dans le cadre purement illustratif mais nullement limitatif du fouet 10 de la figure 1, on va maintenant décrire le procédé de fabrication, conforme à l'invention, de ce type de fouet 10.

Les deux boucles 19 et 20 en fil d'acier inoxydable sont d'abord polies, puis sont ici conformées chacune sensiblement en un rectangle en fixant, par exemple par soudage, leurs deux extrémités pour former leur tronçon 19a, respectivement 20a, destiné à être porté par le moyeu du fouet.

Les deux boucles disjointes ainsi formées 19 et 20 sont ensuite déposées respectivement dans deux empreintes appropriées (non représentées) d'un moule en position ouverte, dont seul l'élément fixe 29 a été succinctement illustré sur la figure 2, selon deux plans respectifs de positionnement horizontal Q₁ et Q₂ qui sont orthogonaux à l'axe longitudinal XX' de la tige métallique 12 en position verticale ; dans cet exemple, figure 2, les deux boucles à plat 19 et 20 sont orthogonales entre elles.

Après ce positionnement orthogonal des deux boucles 19 et 20 dans le moule par rapport à la tige 12, le moule est fermé et la matière plastique est alors injectée dans le moule de la façon habituelle de manière à réaliser le moyeu 15 (figure 3) par surmoulage sur l'extrémité de la tige 12 et sur la portion médiane des deux tronçons respectifs 19a et 20a des deux boucles 19 et 20. Après solidification de la matière plastique constituant le moyeu 15, le démoulage de l'ensemble ainsi formé est réalisé en séparant axialement les éléments fixe 29 et mobile du moule.

Il convient de souligner ici que, d'une manière plus générale, les deux boucles du fouet peuvent être disposées dans le moule selon des plans respectifs qui sont transversaux par rapport à l'axe longitudinal de la tige du fouet, le seul impératif à respecter étant que le positionnement des deux boucles soit tel qu'il autorise un démoulage toujours axial de l'ensemble, ceci dans le but d'utiliser un moule d'une conception simple. Avantageusement, les deux boucles du fouet sont positionnées à plat dans le moule, orthogonalement à l'axe longitudinal de la tige comme illustré dans l'exemple de la figure 2, de sorte que le moule utilisé dans ce cas est d'une grande simplicité.

Le moyeu 15 étant surmoulé, comme on le voit sur la figure 3, l'opération suivante du procédé selon l'invention consiste à faire pivoter en direction axiale les deux boucles 19 et 20, respectivement dans le sens des deux flèches F et G, autour de deux axes de pivotement constitués respectivement par les deux portions médianes des deux tronçons de boucle 19a et 20a internes au moyeu 15. Le pivotement de ces deux portions médianes dans le moyeu 15 surmoulé en matière plastique est par exemple facilité par le traitement de polissage des deux boucles 19 et 20 en fil d'acier inoxydable, limitant ainsi la friction entre les deux matériaux plastique-métal.

Par ce pivotement des deux boucles 19 et 20, les tronçons 19b et 20b des deux boucles opposés au moyeu 15 se croisent en leur région médiane, dans deux plans orthogonaux, à un point de croisement P situé sur l'axe longitudinal XX' de la tige 12, comme le montre la figure 4.

Les deux tronçons croisés 19b et 20b des deux boucles 19 et 20 sont ensuite fixés l'un à l'autre, par exemple par soudage, à leur point de croisement P, permettant ainsi d'obtenir le fouet 10 tel qu'illustré à la figure 1.

Bien entendu, le procédé de fabrication selon l'invention qui vient d'être décrit en référence à un fouet à boucles de forme sensiblement rectangulaire, s'applique également à tout fouet de batteur ayant des boucles de diverses formes géométriques respectives adaptées à la préparation culinaire à réaliser, sans sortir pour cela du cadre de l'invention tel que défini dans les revendictions.

## Revendications

1. Procédé de fabrication d'un fouet de batteur électroménager comportant une tige (12) présentant un axe longitudinal (XX') et comprenant, à l'une de ses extrémités, un moyeu (15) portant au moins deux boucles (19,20) formant chacune un agitateur réalisé en un fil métallique dont les extrémités sont solidaires du moyeu (15), latéralement à celui-ci, ledit moyeu (15) étant réalisé par une opération de surmoulage par injection d'une matière plastique sur l'extrémité de la tige (12) et sur les extrémités respectives des deux boucles (19,20),
**caractérisé en ce que** l'opération de surmoulage, d'une part, est précédée d'une opération consistant à positionner dans le moule les deux boucles (19,20) selon des plans respectifs (Q₁,Q₂) transversaux à l'axe longitudinal (XX') de la tige (12) de manière à permettre ultérieurement un démoulage axial, et d'autre part, est suivie successivement d'une opération consistant à faire pivoter chacune des deux boucles (19,20) autour de ses extrémités pour amener lesdites boucles (19,20) dans une position d'assemblage dans laquelle les tronçons (19b,20b) des boucles opposés au moyeu (15) se rejoignent en leur région médiane en un point de jonction (P) situé sur l'axe longitudinal (XX') de la tige (12), et d'une opération de fixation des boucles (19,20) entre elles au niveau de leur point de jonction (P).

2. Procédé selon la revendication 1,
**caractérisé ce que** les plans de positionnement (Q₁,Q₂) des deux boucles (19,20) dans le moule sont sensiblement horizontaux et orthogonaux à l'axe longitudinal (XX') de la tige (12).

3. Procédé selon la revendication 2,
**caractérisé en ce que** les deux boucles (19,20) sont disposées orthogonalement entre elles dans leurs plans horizontaux respectifs (Q₁,Q₂) de positionnement dans le moule, les tronçons (19b,20b) des deux boucles opposés au moyeu (15), après pivotement desdites boucles, se croisant en leur région médiane et étant ensuite fixés au point de croisement (P) constituant ledit point de jonction.

4. Procédé selon l'une des revendications 1 à 3,
**caractérisé en ce que** l'opération de positionnement des deux boucles (19,20) dans le moule est précédée d'une opération de fixation des extrémités respectives de chacune des deux boucles.

5. Procédé selon la revendication 4,
**caractérisé en ce que** l'opération de fixation des extrémités respectives de chacune des deux boucles (19;20) consiste en une soudure de celles-ci.

6. Procédé selon l'une quelconque des revendications précédentes, pour lequel les deux boucles (19,20) sont en acier inoxydable,
**caractérisé en ce qu**'il comporte, avant l'opération de positionnement des deux boucles (19,20) dans le moule, une opération de polissage notamment des extrémités respectives des deux boucles en acier inoxydable.

7. Procédé selon l'une quelconque des revendications précédentes,
**caractérisé en ce que** l'opération de fixation des boucles (19,20) entre elles au niveau de leur point de jonction (P) consiste en une soudure de celles-ci.

8. Fouet de batteur électroménager comportant une tige (12) dont une extrémité (12a) est adaptée à être entraînée en rotation par un groupe moteur interne au batteur et dont l'autre extrémité (12b) comporte un moyeu (15) portant au moins deux boucles (19,20) formant chacune un agitateur réalisé en un fil métallique dont les extrémités sont solidaires du moyeu (15), latéralement à celui-ci,
**caractérisé en ce qu**'il est obtenu par exécution du procédé selon l'une quelconque des revendications précédentes.

## Claims

1. A method for manufacturing a whisk of a domestic electric beater comprising a shank (12) having a longitudinal axis (XX') and comprising, at one of its ends, a hub (15) carrying at least two loops (19, 20) each forming a stirring element made of a metallic wire the ends of which are fixed to the hub (15), laterally to it, said hub (15) being made by an operation of injection moulding of a plastic material on the end of the shank (12) and on the respective ends of the two loops (19, 20),
**characterised in that** the moulding operation, on the one hand, is preceded by an operation consisting of positioning the two loops (19, 20) in the mould in respective planes (Q₁, Q₂) transverse with respect to the longitudinal axis (XX') of the shank (12) so as to subsequently permit an axial removal from the mould and, on the other hand, is succeeded successively by an operation consisting of pivoting each of the two loops (19, 20) around its ends to bring the loops (19, 20) into an assembling position in which the portions (19b, 20b) of the loops opposite the hub (15) come together in their mid-regions at a junction point (P)located on the longitudinal axis (XX') of the shank (12) and an operation of fixing the loops (19, 20) together in the region of their junction point (P).

2. A method according to claim 1,
**characterised in that** the positioning planes (Q₁, Q₂) of the two loops (19, 20) in the mould are substantially horizontal and orthogonal to the longitudinal axis (XX') of the shank (12).

3. A method according to claim 2,
**characterised in that** the two loops (19, 20) are disposed orthogonally to one another in their respective horizontal positioning planes (Q₁, Q₂) in the mould, the portions (19b, 20b) of the two loops opposite the hub (15), after the pivoting of the loops, cross over one another in their mid-regions and are then fixed together at the cross over point (P) constituting said junction point.

4. A method according to any one of claims 1 to 3,
**characterised in that** the operation of positioning the two loops (19, 20) in the mould is preceded by an operation of fixing together the respective ends of each of the two loops.

5. A method according to claim 4,
**characterised in that** the operation of fixing the respective ends of each of the two loops (19, 20) together consists in soldering the latter together.

6. A method according to any one of the preceding claims, in which the two loops (19, 20) are made of stainless steel, **characterised in that** it comprises, before the operation of positioning the two loops (19, 20) in the mould, a polishing operation, in particular of the respective ends of the two stainless steel loops.

7. A method according to any one of the preceding claims, **characterised in that** the operation of fixing the two loops (19, 20) together in the region of their junction point (P) consists in soldering them together.

8. A domestic electric beater whisk comprising a shank (12) one end (12a) of which is adapted to be driven in rotation by a motor unit inside the beater and the other end (12b) of which comprises a hub (15) carrying at least two loops (19, 20) each forming a stirring element made of a metallic wire the ends of which are fixed to the hub (15), laterally to it,
**characterised in that** it is obtained by the method in accordance with any one of the preceding claims.

## Patentansprüche

1. Verfahren zur Herstellung eines Haushaltselektroquirls mit einem Stiel (12), der eine Längsachse (XX') besitzt und an einem seiner Enden eine Nabe (15) aufweist, die Wenigstens zwei Schleifen (19, 20) trägt, die jeweils einen Rührer bilden, der aus einem Metalldraht hergestellt ist, dessen Enden seitlich an der Nabe (15) befestigt sind, wobei die Nabe (15) durch einen Arbeitsgang des Spritzgießens zum Anformen eines Kunststoffs auf das Ende des Stiels (12) und die jeweiligen Enden der beiden Schleifen (19, 20) hergestellt wird, **dadurch gekennzeichnet, daß** dem Arbeitsgang des Anformens einerseits ein Arbeitsgang vorangeht, der darin besteht, die beiden Schleifen (19, 20) jeweils nach zu der Längsachse (XX') des Stiels quer liegenden Ebenen (Q1, Q2) derart in der Form zu positionieren, daß später ein axiales Entformen möglich wird, und andererseits nacheinander ein Arbeitsgang, der darin besteht, daß jede der beiden Schleifen (19, 20) um ihre Enden verschwenkt wird, um die Schleifen (19, 20) in eine Montageposition zu bringen, in der die der Nabe (15) gegenüberliegenden Abschnitte (19b, 20b) der Schleifen in ihrem Mittenbereich an einem Verbindungspunkt (P) verbunden sind, der auf der Längsachse (XX') des Stiels (12) liegt, sowie ein Arbeitsgang zur Befestigung der Schleifen (19, 20) aneinander auf Höhe ihres Verbindungspunkts (P) folgen.

2. Verfahren nach Anspruch 1,
**dadurch gekennzeichnet, daß** die Positionierungsebenen (Q1, Q2) der beiden Schleifen (19, 20) in der Form im wesentlichen horizontal und senkrecht zu der Längsachse (XX') des Stiels (12) liegen.

3. Verfahren nach Anspruch 2,
**dadurch gekennzeichnet, daß** die beiden Schleifen (19, 20) senkrecht zueinander in ihren jeweiligen horizontalen Positionierungsebenen (Q1, Q2) in der Form angeordnet sind, wobei sich die der Nabe (15) gegenüberliegenden Abschnitte (19b, 20b) nach der Verschwenkung der Schleifen in ihrem Mittelbereich kreuzen und dann am Kreuzungspunkt (P) befestigt werden, der den Verbindungspunkt bildet.

4. Verfahren nach einem der Ansprüche 1 bis 3,
**dadurch gekennzeichnet, daß** dem Arbeitsgang der Positionierung der beiden Schleifen (19, 20) in der Form ein Arbeitsgang der Befestigung der jeweiligen Enden jeder der beiden Schleifen vorangeht.

5. Verfahren nach Anspruch 4,
**dadurch gekennzeichnet, daß** der Arbeitsgang der Befestigung der jeweiligen Enden jeder der beiden Schleifen (19, 20) aus ihrer Verschweißung besteht.

6. Verfahren nach einem der vorhergehenden Ansprüche, für das die beiden Schleifen (19, 20) aus rostfreiem Stahl bestehen,
**dadurch gekennzeichnet, daß** es vor dem Arbeitsgang der Positionierung der beiden Schleifen (19, 20) in der Form ein Arbeitsgang des Polierens insbesondere der jeweiligen Enden der beiden Schleifen aus rostfreiem Stahl umfaßt.

7. Verfahren nach einem der vorhergehenden Ansprüche,
**dadurch gekennzeichnet, daß** der Arbeitsgang der Befestigung der Schleifen (19, 20) aneinander auf Höhe ihres Verbindungspunkts (P) aus ihrer Verschweißung besteht.

8. Elektrohaushaltsquirl mit einem Metallstiel (12), von dem ein Ende (12a) durch ein Motoraggregat im Quirl in Drehung angetrieben werden kann und das andere Ende (12b) eine Nabe (15) aufweist, die wenigstens zwei Schleifen (19, 20) trägt, die jeweils einen Rührer bilden, der aus einem Metalldraht besteht, dessen Enden seitlich an der Nabe (15) befestigt sind,
**dadurch gekennzeichnet, daß** er durch die Durchführung des Verfahrens nach einem der vorhergehenden Ansprüche erhalten ist.
